Europäisches Patentamt

European Patent Office

Office européen des brevets

(11) Veröffentlichungsnummer: **0 149 135 B1**

(12) **EUROPÄISCHE PATENTSCHRIFT**

(45) Veröffentlichungstag der Patentschrift:
26.08.87

(21) Anmeldenummer: **84115226.7**

(22) Anmeldetag: **12.12.84**

(51) Int. Cl.⁴: **C 09 J 7/02**

(54) **Rückstandsfrei wieder ablösbare haftklebrige Flächengebilde.**

(30) Priorität: **21.12.83 DE 3346100**

(43) Veröffentlichungstag der Anmeldung:
**24.07.85 Patentblatt 85/30**

(45) Bekanntmachung des Hinweises auf die Patenterteilung:
**26.08.87 Patentblatt 87/35**

(84) Benannte Vertragsstaaten:
**AT BE CH DE FR GB IT LI NL SE**

(56) Entgegenhaltungen:
**DE - A - 2 460 855**

**PATENTS ABSTRACTS OF JAPAN, Band 5, Nr. 164
(C-76)[836], 21. Oktober 1981
PATENTS ABSTRACTS OF JAPAN, Band 7, Nr. 135
(C-170)[1280], 11. Juni 1983
PATENTS ABSTRACTS OF JAPAN, Band 6, Nr. 214
(C-131)[1092], 27. Oktober 1982**

(73) Patentinhaber: **Beiersdorf Aktiengesellschaft,
Unnastrasse 48, D-2000 Hamburg 20 (DE)**

(72) Erfinder: **Gleichenhagen, Peter, Dr., Holitzberg 9,
D-2000 Hamburg 62 (DE)**
Erfinder: **Behrend, Ekkehard, Dr., Erlenweg 74,
D-2083 Halstenbek (DE)**
Erfinder: **Jauchen, Peter, Sachsenweg 18-o,
D-2000 Hamburg 61 (DE)**

## Beschreibung

Die vorliegende Erfindung betrifft rückstandsfrei wieder ablösbare und erneut verklebbare haftklebrige Flächengebilde. Derartige Flächengebilde werden in der Praxis seit langem verwendet, z.B. rückstandsfrei ablösbare reversibel klebende Haftklebeetiketten, Schutzfolien, Abdeckpapiere, Notizzettel und Werbemittel sowie rückstandsfrei ablösbare und erneut verklebende Wund- oder Wundverbandpflaster.

Für diese Zwecke sind bereits eine Anzahl verschiedener Haftklebemassen und Herstellverfahren beschrieben worden.

In der DE-A-2 407 494 wird ein schwach haftklebriges Emulsionspolymerisat beschrieben, das durch Copolymerisation von 2-Äthylhexylacrylester, Methylmethacrylester, (Meth)acrylsäure und 1,4 Butandioldiacrylester in Gegenwart von Weichmachern, wie Paraffinöl, Squalen oder niedermolekularem Polyisobutylen, erstellt wird und aufgrund seiner verhältnismässig geringen Adhäsivität eine Wiederablösbarkeit der damit ausgerüsteten Haftklebeartikel ermöglicht.

In der JP-A-82 87 481 wird eine wässrige Haftklebedispersion beschrieben, die durch Copolymerisation von Alkylacrylestern mit Esterresten C $\geq$ 4, Methylacrylsäure und N-Methylolacrylamid unter Zusatz spezieller Weichmacher hergestellt wird. Nach Zugabe von Verdickungsmitteln sind diese Dispersionen zur Ausrüstung von reversibel klebenden Papieretiketten geeignet. In der JP-A 82 70 162 wird ein ähnliches Verfahren aufgezeigt.

Die JP-A-82 31 972 beschreibt ein Emulsionscopolymer, das aus 2-Äthylhexylacrylat, Methylmethacrylat, Acrylsäure, Itaconsäure und Ethylendimethylacrylat hergestellt wird und nach Puffern mit Natriumacetat und Verdicken mit Hydroxyethylcellulose auf Haftklebemasse für wiederablösbare Haftklebeartikel geeignet ist.

Die JP-A-82 42 778 beschreibt ein schwach haftklebriges, perlförmiges Copolymer, das in wässriger Dispersion aus (Meth)acrylestern in Gegenwart eines Dispergierhilfsmittels erstellt wird. Das wasserlösliche Dispergierhilfsmittel besteht aus einem Copolymer, das aus einem geringen Anteil Butylacrylat und einem hohen Anteil Acrylsäure durch radikalische Copolymmerisation erhalten wird.

Die US-A-3 691 140 und die DE-A-2 417 312 beschreiben die Herstellung von wiederablösbaren, mehrfach verwendbaren Haftklebeartikeln, deren Haftklebeschicht aus haftklebrigen Mikrokugeln besteht. Die Mikrokugeln werden in wässriger Dispersion in Gegenwart anionischer Emulgatoren durch Copolymerisation von Alkylacrylestern, speziellen wasserlöslichen ionischen Monomeren und Maleinsäureanhydrid synthetisiert. Zur Verbesserung der Verankerung werden die Mikrokugeln mittels spezieller Verankerungsschichten auf den Trägermaterialien befestigt.

In der US-A-2 510 120 werden zur Verbesserung der Wiederablösbarkeit haftklebriger Flächengebilde eine partielle flächige Beschichtung, z.B. Streifen oder andere flächige Muster, beschrieben.

Die DE-A-2 535 897 beschreibt einen partiellen flächigen Auftrag von Haftklebemassen auf Etikettenpapier, bei dem mittels einer Gravurwalze nur die Etikettenfläche vollflächig vor dem Ausstanzen beschichtet wird.

Die JP-A-56 95 972 beschreibt selbstklebende Blätter, die alternierend Segmente aus Kleber und Segmente aus klebstoffabweisendem Release-Material aufweisen, wobei die Release-Segmente als Abstandshalter eine stärkere Verformung der eng daneben liegenden Kleber-Segmente beim Anpressen verhindern und zu diesem Zweck eine flache Oberfläche aufweisen.

Haftklebeartikel, die nach den aufgezeichneten Verfahren mit entsprechenden Haftklebemassen ausgerüstet sind, weisen neben vorteilhaften Eigenschaften auch gravierende Mängel auf.

1. Weichmacher, die häufig in den beschriebenen Haftklebemassen enthalten sind, z.B. Paraffinöle, neigen zum Ausbluten aus der Masse und können die Trägermaterialien, z.B. Papier, durchfetten. Ausserdem ändert sich dadurch das klebtechnische Eigenschaftsprofil. Schliesslich können sie bei längerer Verklebungszeit auch in die verklebten Substrate eindringen.

2. Verdicker und Emulgatoren schlagen sich beim Trocknen und Verfilmen der Emulsion auf den Haftklebeteilchen nieder, vermindern die Haftklebrigkeit und fördern insbesondere die Wasseraufnahme der Haftklebefilme in Abhängigkeit von der Umgebungsfeuchte und dem Feuchtegehalt der verklebten Substrate. Durch die weichmachende Wirkung bereits geringer Wassermengen ändern sich die klebtechnischen Eigenschaften in unkontrollierbarer Weise, was die Verwendbarkeit derartiger Haftklebeartikel beeinträchtigt.

3. Bei einer vollflächigen Haftklebebeschichtung steigt die Klebkraft, abhängig von der Verklebungszeit an. Dies liegt darin begründet, dass zur Ausbildung einer Verklebung Haftklebefilme eine, wenn auch eingeschränkte Fliessfähigkeit besitzen müssen, da ohne diese Eigenschaft eine Benetzung der zu verklebenden Substrate unmöglich ist. Bei einer kurzzeitigen Verklebung werden nur die Rauhigkeitsspitzen der Substratoberfläche benetzt. Die Festigkeit der Verklebung ist dementsprechend gering. Mit zunehmender Verklebungszeit fliesst die Haftklebemasse auch in die Rauhhigkeitstiefen der normalerweise nicht mikroskopisch glatten Substratoberfläche ein. Dadurch steigt die zur Trennung der Verklebung benötigte Kraft auf das zwei- bis dreifache der Anfangswerte. Beim Lösen der Verklebung kann dadurch das Trägermaterial oder der Haftklebefilm gespalten werden (Kohäsionsbruch). Das Substrat wird verunreinigt, der Haftklebeartikel für eine erneute Verwendung unbrauchbar. Teilweise können auch die Oberflächen wenig fester Substrate z.B. Papiere beschädigt werden. Da Haftklebeartikel auf Untergründen verschiedenster Rauhigkeit, Festigkeit und chemischer Zusammensetzung verwendet werden, ist eine zufriedenstellende Abstimmung zwischen ausrechender Anfangsklebkraft und reversibel lösbarer Endklebkraft mit vollflächigen glatten Beschichtungen nur in speziellen Fällen erreichbar.

4. Partielle, nicht vollflächige Haftklebebeschichtungen, die in Form von Streifen oder anderen Mustern auf die Trägermaterialien aufgebracht werden, können insbesondere für weniger reissfeste Träger, wie z.B. Papier, vorteilhaft sein. Durch die verkleinerte Verklebungsfläche werden die Zugkräfte auf das Trägermaterial beim Trennen der Verklebung in Grenzen gehalten und ein Aufspalten des Trägermaterials vermieden. In den flächig verklebten Bereichen wächst aber die Adhäsionskraft zum Substrat nach dem in vorangegangenen Abschnitt beschriebenen Mechanismus zeitabhängig an, so dass nach entsprechend langer Verklebungszeit ein Aufspalten des Haftklebefilms beim Lösen der Verklebung droht, insbesondere dann, wenn die Verklebung in Streifenrichtug gelöst wird.

5. Beschichtungen mit haftklebrigen Mikrokugeln geeigneter Grösse (50 - 150 µm) zeigen das zeitabhängige Anwachsen der Verklebungsfestigkeit in geringem Masse. Die kautschukelastischen Rückstellkräfte der bei der druckempfindlichen Verklebung auf dem Substrat abgeplätteten Kugeln streben die Rückbildung der ursprünglich gekrümmten Oberfläche an und wirken dadurch einem stärkeren Einfliessen der Haftklebemasse in die Rauhigkeitstiefen des Substrats entgegen. Beim Lösen der Verklebung wirkt die Trennkraft konzentriert auf die verhältnismässig kleinen, kreisförmigen, diskreten verklebten Kugelabplattungen und wird von dort in die weit grösseren Kugelvolumina verteilt. Dadurch wird der gewünschte Adhäsionsbruch bevorzugt herbeigeführt, der unerwünschte Kohäsionsbruch unterdrückt. Neben diesen Vorteilen weist dieses Verfahren auch einige Mängel bzw. Einschränkungen auf. Um die Mikrokugeln auf dem Träger zu verankern, wird eine Bindemittelschicht benötigt, in die die Kugeln eintauchen, und die aufgrund der grösseren Benetzungsfläche eine Verankerung auf der Trägeroberfläche bewirkt. Dieses Prinzip erfodert jedoch eine ebene, nur begrenzt saugfähige Oberfläche, um zu verhindern, dass das Bindemittel in den Untergrund eindringt und damit im oben beschriebenen Sinne wirkungslos wird. Die Auswahl der nach diesem Prinzip beschichtbaren Träger wird dadurch eingeschränkt bzw. macht einen zusätzlichen Glattstrich für z.B. Papier erforderlich.

Beim Auftragen der Mikrokugeln auf das Trägermaterial ist es zudem erforderlich, eine monopartikulare Beschichtung zu erzeugen. In Bereichen, in denen Mikrokugeln übereinander positioniert sind, ist eine sichere Verankerung nicht mehr gewährleistet, da der oben beschriebene Verankerungsmechanismus dann wirkungslos wird. Bei einer statistisch deutlich messbaren Grössenverteilung der Mikrokugeln ist diese Bedingung nur schwierig zu erfüllen. Die einer Gaussschen Verteilungsfunktion folgende statistische Grössenverteilung der haftklebrigen Mikrokugeln hat weiterhin den Nachteil, dass die grösseren weiter über die Trägeroberfläche hinausragenden Mikrokugeln bei der druckempfindlichen Verklebung besonders stark beansprucht werden, die kleineren dagegen nur wenig oder gar nicht. Zudem bewirken die Rückstellkräfte der grösseren Kugeln, dass die unter dem Anpressdruck gebildeten Verklebungen mit den kleineren Kugeln sich zeitabhängig lösen und zu einer Reduzierung der Verklebungsfestigkeit führen.

Selbstklebende Bänder gemäss JP-A-56 95 72 können in ihrem Kleber-Release-Raster zudem nur in grösseren Dimensionen hergestellt werden. Da es kein Auftragswerk zum gleichzeitigen Auftrag der beiden Komponenten gibt, ist es nötig, nach einem ersten Auftrag in einem zweiten Arbeitsgang passgenau die zweite Komponente in die Zwischenräume aufzubringen, wobei das verwendete Auftragswerk nicht einmal wie bei einem Druckvorgang an der Träger-Oberfläche anliegen kann. Auch ist es nötig, gleiche Höhen von Kleber- und Release-Segmenten herzustellen. Und schliesslich sind die Release-Segmente mit einer planen Oberfläche herzustellen, sämtlich Parameter, die Dimensionen von mindestens mehreren Millimetern und technisch realisierbar sogar im Centimeterbereich und aufwärts bedingen. Neben diesen relativ grossen Dimensionen sind weitere Nachteile der beträchtliche Herstellungs-Aufwand und die grosse Menge an notwendigem Release-Material.

Aufgabe der Erfindung war es daher, haftklebrige Flächengebilde der geschilderten Art zu schaffen, bei denen kalottenförmige Haftstellen mit ihrer Kalottenbasis auf dem Flächengebilde haften, die in kleinen Dimensionen im Mikrometer-Bereich technisch und wirtschaftlich herstellbar sind und die je nach Anspressdruck eine variable Klebkraft zeigen und damit auf den verschiedenartigsten Substraten verklebt und auch wieder rückstandsfrei abgelöst werden können.

Diese Aufgabe wird erfindungsgemäss gelöst durch rückstandsfrei wieder ablösbare und erneut verklebbare haftklebrige Flächengebilde mit kalottenförmigen Haftstellen, wobei die Kalottenbasis auf dem Flächengebilde haftet, dadurch gekennzeichnet, dass die kalottenförmigen Haftstellen einen Basisdurchmesser von 30 - 600 µm haben und im Siebdruck oder Tiefdruck mittels Klebstoff-Dispersionen mit einem Feststoffgehalt von mindestens 45 Gew.-% hergestellt sind, wobei die verwendeten Dispersionen wässrige Dispersionen, Organosole oder Plastisole sind.

Die erfindungsgemässen haftklebriger Flächengebilde lösen die gestellte Aufgabe in überzeugender Weise. Feinste Raster sind wirtschaftlich und ohne übertriebenen technischen Aufwand herstellbar, auf einfachsten und verschiedenartigen Träger.

Die angestrebte Kalottenform der Haftstellen braucht in der Praxis nicht in idealer Weise erreicht zu werden. So ist es für die erfindungsgemässen Zwecke möglich, Haftstellen mit nicht oder nicht ganz kreisförmiger Basis zu verwenden, da aufgrund der starken Strukturviskosität und Thixotropie die Haftstelle eine angenäherte Kalottenform ausbildet. Bevorzugt weist die verwendete Klebmasse nach dem Auftrag demgemäss eine starke Strukturviskosität und Thixotropie auf, ausreichend hoch zur Ausbildung von Haftstellen mit angenäherter Kalottenform.

Weitere bevorzugte Merkmale der Klebmasse sind gute Haftklebrigkeit, gutes Verfilmen und eine ausreichende Kautschuk-Elastizität.

Geeignete Haftkleber sind insbesondere solche auf der Basis von (Meth)-Acrylsäureestern mit Alkylresten von $C_4$ bis $C_{12}$.

Daneben können aber auch geringe Anteile von (Meth)-Acrylsäureestern mit Alkylresten von $C_1$ bis $C_3$ bzw. $C_{13}$ bis $C_{18}$ enthalten sein. Ausserdem können geringe Anteile (etwa 0-12 bzw. %) (Meth)-Acrylsäure und/oder andere copolymerisierbare Säuren, wie Maleinsäure, Fumarsäure, Itaconsäure einpolymerisiert sein. Zur Steigerung der Kohäsion und Verbesserung der Stabilität der Dispersion können auch Anteile von Acrylnitril oder Acrylamiden sowie Vernetzerzusätze, z.B. N-Methylolacrylamid oder Glycidyl-methacrylat in Verbindung mit Hydroxylgruppen tragenden (Meth)-Arcylsäureestern oder mehrfunktionelle Acrylester, z.B. Butandiol-bis-acrylat, verwendet werden. Schliesslich kann ein Teil der (Meth)-Acrylester durch copolymerisierbare Verbindungen, wie Vinylacetat oder Vinylpropionat ersetzt sein.

Zur Erzeugung haftklebriger, mit ihrer Basis auf Trägermaterialen verankerter Kalotten sind die an sich bekannten technischen Druckverfahren vom Typ Siebdruck oder Tiefdruck hervorragend geeignet, wobei als Haftklebemassen Dispersionen mit hohem Feststoffgehalt, bevorzugt konzentrierte, thixotrope, wässrige Haftklebedispersionen verwendet werden. Wässrige Dispersionen sind bevorzugt, jedoch können auch Dispersionen vom Typ der Organosole verwendet werden, also solche auf Basis eines hochsiedenden organischen Nicht-Lösungsmittels, oder auch solche vom Typ der Plastisole, wie pastenartiger Produkte aus Weichmacher plus Kunststoff. Bevorzugt haben wässrige Dispersionen einen Feststoffgehalt von etwa 55 - 65 Gew.-%.

Das Prinzip des Rotationssiebdrucks besteht in der Verwendung einer rotierenden nahtlosen, trommelförmigen, perforierten Rundschablone. Im Innenmantel presst eine mechanisch oder magnetisch gehalterte Rund- oder Vierkantrakel die in die Trommel eingespeiste Haftklebedispersion durch die Perforation der Schablonenwand auf die Trägerbahn. Diese wird mit einer Geschwindigkeit, die der Umfangsgeschwindigkeit der rotierenden Siebtrommel entspricht, mittels einer Gegendruckwalze gegen den Aussenmantel der Siebtrommel geführt.

Anschliessend wird die Beschichtung in einem Heissluftkanal oder durch Infrarot bzw. Hochfrequenzstrahlung getrocknet.

Die Kalottenform entsteht bei diesem Verfahren nach folgendem Mechanismus: Der Rakeldruck fördert die Haftklebedispersion durch die Siebbohrung an das Trägermaterial. Dieses wird entsprechend der Lochgeometrie zunächst von der Dispersion flächig genetzt. Die Grösse der so ausgebildeten Basis der Kalotte wird durch den Durchmesser des Sieblochs vorgegeben. Entsprechend der Transportgeschwindigkeit der Trägerbahn bzw. Rotationsgeschwindigkeit der Siebtrommel wird die Bohrung vom Träger angehoben. Bedingt durch die innere Kohäsivität der Haftklebedispersion wird von der auf dem Träger bereits adhärierenden Basis der in der Bohrung gespeicherte Vorrat an Haftklebedispersion abgezogen, bzw. durch den Rakeldruck auf die Bahn gefördert. Nach Beendigung dieses Massetransports formt sich, abhängig von der Strukturviskosität, Thixotropie und der Fliessfähigkeit der Dispersion, über der vorgegebenen Basisfläche die mehr oder weniger stark gekrümmte Oberfläche der Kalotte. Das Verhältnis Höhe zu Basis der Kalotte hängt, diesem Mechanismus entsprechend, im wesentlichen vom Verhältnis Lochdurchmesser zu Wandstärke der Siebtrommel und den physikalischen Eigenschaften (Fliessverhalten, Oberflächenspannung, Benetzungsrandwinkel auf dem Trägermaterial) der Dispersion ab. Beim Trocknen schrumpft die Höhe der Kalotte entsprechend dem Wasserverlust. Grösse und Form der beim Trocknen auf dem Trägermaterial verankernden Basis ändert sich nicht oder nur in sehr kleinen Grenzen.

Der beschriebene Bildungsmechanismus der Kalotten erfordert saugfähige oder zumindest von den Klebmassen benetzbare Trägermaterialien. Nicht benetzbare Trägeroberflächen sollten durch zusätzliche Massnahmen wie z.B. elektrische Corona-Entladung oder Beschichtung mit Benetzung vermittelnden Stoffen behandelt werden.

Mit dem aufgezeigten Druckverfahren kann die Grösse und Form der Kalotten definiert festgelegt werden. Für die Anwendung relevante Grössenunterschiede, die wie beschrieben, die Qualität von Haftklebeartikeln beeinträchtigen können, treten bei sachgemässer Ausführung bei diesem Beschichtungsverfahren nicht auf. Der Basisdurchmesser der Kalotten kann in einem Bereich von ca. 30 μm bis zu ca. 600 μm gewählt werden, die Höhe der Kalotten entsprechend von ca. 30 μm bis zu ca. 600 μm. Bevorzugt werden Basisdurchmesser von 80 - 500 μm, wobei der Bereich kleinerer Durchmesser für glatte Trägermaterialien, die grösseren Durchmesser mit entsprechend grösserer Kalottenhöhe für rauhere oder stark porige Trägermaterialien vorgesehen sind.

Die Positionierung der Kalotten auf dem Träger wird durch die in weiten Grenzen variierbare Geometrie des Auftragswerkes, z.B. Siebgeometrie oder Gravurgeometrie, definiert festgelegt. Mit Hilfe der aufgezeigten einstellbaren Parameter kann das haftklebetechnisch gewünschte Eigenschaftsprofil der Beschichtung, abgestimmt auf die verschiedenen Trägermaterialien und Verwendungszwecke, sehr genau eingestellt werden.

Die erfindungsgemässen Flächengebilde mit ihren mechanisch aufgebrachten haftklebrigen Halbkugeln besitzen u.a. die Vorteile der bekannten Mikrokugeln, ohne deren Nachteile aufzuweisen:

— Es zeigt sich, dass mechanisch aufgebrachte Kalotten eine wesentlich geringere Grössenverteilung besitzen als chemisch erzeugte Perlpolymerisate. Während Polymerisationsreaktionen einer Gaussschen Verteilungskurve folgende Molekülgrössen bzw. Perlpolymerisatgrössen aufweisen, lassen sich Werkzeuge für den mechanischen Kalottenauftrag mit einer gegen Null gehenden Toleranz fertigen.

— Es zeigt sich ferner, dass alle aufgetragenen Kalotten für die Verklebung wirksam sind, da sie aufgrund des Auftragsverfahrens ausnahmslos gleiche Abmessungen besitzen, so dass nur die tatsächlich notwendige Klebstoffmenge zur Verfügung gestellt werden muss. Daraus resultiert zudem eine beträchtliche Einsparung an Klebstoff. Ausserdem wird die Verklebung im Vergleich zum Stand der Technik reversiebel verbessert.

— Es zeigt sich ferner, dass jeder Träger unabhängig von seiner Oberflächenrauhigkeit und Saugfähigkeit beschichtet werden kann u.z. in ausserordentlich wirtschaftlicher Weise. Insbesondere ist keine Glättung der Trägeroberfläche durch mechanische Einwirkung wie z.B. Satinage oder Verwendung von Vorstrichen zur Ausfüllung der Unebenheiten notwendig. Das Einsacken der Klebstoffdispersionen in proröses Trägermaterial kann durch Verwendung besonders grobteiler Dispersionen verhindert werden. Bei schlechten Haftgründen, wie z.B. Polyäthylen, kann jedoch ein Primer Verwendung finden, der dann die Aufgabe der Haftvermittlung zu erfüllen hat.

— Es zeigt sich ferner, dass für eine sichere Haftung kein Bindemittel erforderlich ist, da die Verankerung gewährleistet ist durch die der Oberflächenstruktur des Trägers angepasste Basisfläche, die in jedem Fall grösser ist als die dem Substrat zugewandte und dort zur Verklebung kommende Fläche.

— Es zeigt sich ferner, dass die Grösse der Kalotten in sehr weiten Grenzen variabel ist, ohne dass der Effekt der reve.siblen Verklebungsmöglichkeit verlorenginge.

— Es zeigt sich ferner, dass durch die frei wählbaren Parameter Durchmesser der Kalotten an der Basis, Höhe der Kalotten, geometrische Verteilung der Kalotten und Häufigkeit (Zahl/Flächeneinheit) die Eigenschaften der dieserart haftklebrig beschichteten Substrate für nahezu jeden Einsatzzweck, in dem Reversibilität gefordert ist, eingestellt werden können.

— Es zeigt sich ferner, dass die Klebstoffeigenschaften in sehr weitem Rahmen modifiziert werden können: von sehr weich, starktackig und gering scherfest bis zu hart, schwachtackig und hochscherfest.

— Es zeigt sich ferner, dass die Raumform der Kalotten bzw. angenäherten Kalotten mit ihren vorteilhaften Eigenschaften bei der reversiblen Verklebung durch ihre Kautschuk-Elastizität beständig ist. Sie wird schon deswegen immer wieder nach Deformation durch Druck oder Ablösen eines Substrats angestrebt. Dieses Verhalten kann unterstützt werden durch nachträgliche Vernetzung durch Wärme, Bestrahlung (ESH, UV, HF), durch Einsatz von Füllstoffen.

Nachfolgend wird die Erfindung anhand von Beispielen verdeutlicht, ohne dass damit eine Beschränkung auf diese Beispiele gemeint ist. Vielmehr kann der Fachmann geeignete Änderungen aufgrund seines Fachwissens vornehmen, ohne damit den Rahmen der Erfindung zu verlassen.

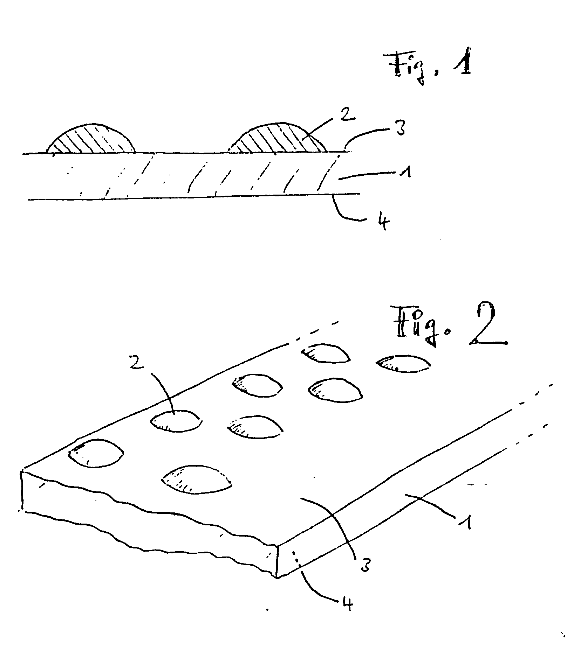

In den Fig. 1 und 2 ist ein erfindungsgemässes haftklebriges Flächengebilde dargestellt. Auf einem Träger 1 aus Papier befinden sich kalottenförmige Haftstellen 2 aus Selbstklebemasse, die in vorgegebenen Mustern oder in geometrischer Zuordnung angeordnet sind. Die Oberfläche 3 des Trägers 1 weist keinen Glättstrich auf, und auch die Rückseite 4 des Trägers 1 ist nicht mit einer klebstoffabweisenden Schicht versehen.

*Beispiel 1*

In eine 15 l fassende Polymerisationsapparatur, ausgerüstet mit Rührer, Rückflusskühler, Temperaturfühler, Stickstoffeinleitrohr und Dosiervorrichtung werden nach Verdrängen des Luftsauerstoffs durch $N_2$ 3,00 kg 2-Äthylhexylacrylat, 0,134 kg Acrylsäure, 0,120 kg Butandiolmonoacrylat, 0,100 kg Butandioldiacrylat, 0,020 kg Tetrabrommethan, 0,050 kg anionischer Emulgator (Na-Salz eines äthoxylierten und sulfonierten Nonylphenols) und 5,00 kg entionisiertes Wasser gegeben. Der Inhalt wird unter Rühren auf 76°C erhitzt. Dann werden 10 g Ammoniumperoxodisulfat, gelöst in 50 g $H_2O$, eindosiert. Nach Einsetzen der Polymerisation wird das Reaktionsgut bei einer Temperatur von 84 - 86°C gehalten. Nach Abklingen der exothermen Reaktion wird die Temperatur auf 80°C eingestellt.

Nach einer Reaktionszeit von 40 min werden 125 g 25%ige wässrige Ammoniaklösung, 2,5 kg 2-Äthylhexylacrylat und weitere 10 g Ammoniumperoxodisulfat zugesetzt.

Nach einer Gesamtreaktionszeit von 6 Stunden ist die Polymerisation beendet.

Die erhaltene Polymerdispersion hat folgende Daten:

Feststoffgehalt: 54%

| Viskosität<br>bei 25°C | : | Schubspannung T<br>Pa | Visk.<br>Pa·s |
|---|---|---|---|
| | | $0,22 \cdot 10^3$ | $0,13 \cdot 10^5$ |
| | | $0,25 \cdot 10^3$ | $0,28 \cdot 10^4$ |
| | | $0,40 \cdot 10^3$ | $0,94 \cdot 10^3$ |

Oberflächenspannung 55 mN/m 25°C.

Ein haftklebriges Flächengebilde mit definierten Kalotten wird auf folgende Weise hergestellt:

Diese Acrylatdispersion wird auf ein Papier (geeignet sind auch ein Vlies oder eine Folie) mit einem Tiefdruck- oder Siebdruckwerk kontinuierlich in der Schichtdicke von 1 - 20 g/m², bezogen auf Trockensubstanz, aufgetragen.

Technische Bedingungen:

| Trägerbahn-Geschwindigkeit: | ca. 10 - 100 m/min |
|---|---|
| Siebgeometrie: | ca. 15 - 40 Löcher/cm |
| Bladeeinstellung: | ca. 1,5 - 30 mm |
| Bladestärke: | ca. 150 - 300 µm |
| Andruck: | ca. 2 - 6 (mm) |

Der Klebstich wird anschliessend in einem Konvektions-Trockenkanal üblicher Bauweise soweit getrocknet, dass er problemlos zur Rolle wickelbar ist.

**Patentansprüche**

1. Rückstandsfrei wieder ablösbare und erneut verklebbare haftklebrige Flächengebilde mit kalottenförmigen Haftstellen, wobei die Kalottenbasis auf dem Flächengebilde haftet, dadurch gekennzeichnet, dass die kalottenförmigen Haftstellen einen Basisdurchmesser von 30 - 600 µm haben und im Siebdruck oder Tiefdruck mittels Klebstoff-Dispersionen mit einem Feststoffgehalt von mindestens 45 Gew.-% hergestellt sind, wobei die verwendeten Dispersionen wässrige Dispersionen, Organosole oder Plastisole sind.

2. Haftklebrige Flächengebilde nach Anspruch 1, dadurch gekennzeichnet, dass der verwendete Kleber ein solcher mit hoher Oberflächenspannung sowie Haftklebrigkeit und Verfilmungsvermögen ist.

3. Haftklebrige Flächengebilde nach Anspruch 1 und 2, dadurch gekennzeichnet, dass der verwendete Kleber einsolcher auf Basis von (Meth)-Acrylsäureestern, gegebenenfalls mit geringen Anteilen anderer Monomereinheiten ist.

4. Haftklebrige Flächengebilde nach Anspruch 1, dadurch gekennzeichnet, dass die verwendeten wässrigen Dispersionen konzentrierte, thixotrope Haftklebe-Dispersionen mit einem Feststoffgehalt von 55 - 65 Gew.-% sind.

5. Haftklebrige Flächengebilde nach einem der Ansprüche 1 bis 4, dadurch gekennzeichnet, dass der Basisdurchmesser der kalottenförmigen Haftstellen 80 - 500, insbesondere 100 - 400 µm ist.

6. Haftklebrige Flächengebilde nach einem der Ansprüche 1 bis 5, dadurch gekennzeichnet, dass die Haftstellen nachträglich vernetzt sind.

7. Haftklebrige Flächengebilde nach Anspruch 6, dadurch gekennzeichnet, dass die Haftstellen nachträglich durch Elektronenstrahlen vernetzt sind.

### Claims

1. A pressure-sensitively adhesive sheet-like structure which can be removed again without leaving a residue and can be caused to re-adhere, and which possesses dome-shaped adhesive zones, the base of the dome adhering to the sheet-like structure, characterized in that the dome-shaped adhesive zones have a base diameter of 30 - 600 µm and are produced by screen printing or gravure printing from adhesive dispersions having a solids content of at least 45% by weight, the dispersions used being aqueous dispersions, organosols or plastisols.

2. Pressure-sensitively adhesive sheet-like structure according to claim 1, characterized in that the adhesive used has a high surface tension, pressure-sensitive adhesiveness and film-forming capacity.

3. Pressure-sensitively adhesive sheet-like structure according to claim 1 and 2, characterized in that the adhesive used is based on acrylic or methacrylic acid esters, if appropriate together with small proportions of other monomer units.

4. Pressure-sensitively adhesive sheet-like structure according to claim 1, characterized in that the aqueous dispersions used are concentrated thioxotropic dispersions of pressure-sensitive adhesive, the dispersions having a solids content of 55 - 65% by weight.

5. Pressure-sensitively adhesive sheet-like structure according to one of claims 1 to 4, characterized in that the base diameter of the dome-shaped adhesive zones is 80 - 500, especially 100 - 400 µm.

6. Pressure-sensitively adhesive sheet-like structure according to one of claims 1 to 5, characterized in that the adhesive zones are subsequently crosslinked.

7. Pressure-sensitively adhesive sheet-like structure according to claim 6, characterized in that the adhesive zones are subsequently crosslinked by electron beams.

### Revendications

1. Articles plans auto-adhésifs décollables sans résidu et à nouveau collables comprenant des domaines adhésifs en forme de calotte, dont la base de la calotte adhère à l'article plan, caractérisés en ce que les domaines adhésifs en forme de calotte ont un diamètre à la base de 30 - 600 µm et sont formés par sérigraphie ou héliogravure au moyen de dispersions d'adhésifs ayant une teneur en solides d'au moins 45% en poids, les dispersions utilisées étant des dispersions aqueuses, des organosols ou des plastisols.

2. Articles plans auto-adhésifs suivant la revendication 1, caractérisés en ce que l'adhésif utilisé est un adhésif à forte tension superficielle présentant l'auto-adhésivité et le pouvoir filmogène.

3. Articles plans auto-adhésifs suivant les revendications 1 et 2, caractérisés en ce que l'adhésif utilisé est un adhésif à base d'esters d'acide (méth)-acrylique éventuellement avec de faibles proportions d'autres unités monomères.

4. Articles plans auto-adhésifs suivant la revendication 1, caractérisés en ce que les dispersions aqueuses utilisées sont des dispersions concentrées thixotropes d'auto-adhésif ayant une teneur en solides de 55 - 65% en poids.

5. Articles plans auto-adhésifs suivant l'une quelconque des revendications 1 à 4, caractérisés en ce que le diamètre de la base des domaines adhésifs en forme de calotte est de 80 - 500 et en particulier de 100 - 400 µm.

6. Articles plans auto-adhésifs suivant l'une quelconque des revendications 1 à 5, caractérisés en ce que les domaines adhésifs sont ultérieurement réticulés.

7. Articles plans auto-adhésifs suivant la revendication 6, caractérisés en ce que les domaines d'adhérence sont ultérieurement réticulés par un rayonnement d'électrons.

Fig. 1

Fig. 2